# EUROPEAN PATENT APPLICATION

(11) **EP 1 151 912 A1**
(43) Date of publication of application: **07.11.2001**
(21) Application number: 00976283.2
(22) Date of filing: 16.11.2000
(51) Int. Cl.: B62K 5/04

(54) **SWING TYPE TRICYCLE**

(30) Priority: 16.11.1999 JP 32515699
(71) Applicant: YAMAHA HATSUDOKI KABUSHIKI KAISHA, Iwata-shi, Shizuoka 438-8501 (JP)
(72) Inventor: KOBAYASHI, Takashi, Yamaha Hatsudoki K.K., Iwata-shi, Shizuoka 438-8501 (JP)
(74) Representative: Grünecker, Kinkeldey, Stockmair & Schwanhäusser Anwaltssozietät
(86) International application number: JP0008077
(87) International publication number: WO0136257

(57) **Abstract**

A swing type tricycle formed of a rear frame supporting two rear wheels (3) and a front flame supporting a front wheel and a seat, connected to each other through a torsion bar extending in longitudinal direction of a body, wherein a support pipe (19) extending from the underside of the seat to the rear of an axle (11) of the rear wheels (3) in parallel with the longitudinal direction of the body is provided on the front frame (9), a main pipe (35) of the rear frame (10) is supported rotatably on the outer peripheral part of the support pipe (19), the torsion bar (51) is stored in the support pipe (19), and the front end part of the torsion bar (51) is connected to the front end part of the support pipe (19) and the rear end part thereof is connected to the rear end part of the main pipe (35).

## Description

### Field of the Invention

This invention relates to a swing type of three-wheeled vehicle constituted by connecting a rear frame having two rear wheels to a front frame through a torsion bar.

### Background of the Invention

A conventional swing type of three-wheeled vehicle having two rear wheels is disclosed for example in a Japanese laid-open patent application No. Hei-9-156563; the vehicle is electric power-assisted. The electric power-assisted three-wheeled vehicle shown in the above publication is constituted to improve turning ability by connecting the front frame supporting a front wheel and a saddle to the rear frame supporting the rear wheels so that the front frame can be swung in right and left directions. On the front frame are mounted; an electric motor, a power unit for propelling the rear wheels with resultant power produced by combining electric motor power and human power (pedal depressing force) , a battery for supplying power to the electric motor, etc.

The connecting portion between the front frame and the rear frame is provided with a swing righting device for restoring the vehicle body or the front frame tilted during a turn or the like to the upright attitude. The swing righting device is constituted to pull the part of the front frame located above the swing axis (the part that swings in right and left directions) with two tension springs from both right and left sides.

It is preferable that the righting force (the force for restoring to upright attitude) of the swing righting device increases in proportion to the tilt angle. However, the swing righting device of the tension spring type described above, due to its structural limit, has a problem of less degree of freedom in choosing the magnitude of the force (the righting force) to be increased according to the tilt angle. Another problem is that the power unit must be tilted together with the front frame, which ends up in heavy handling during a turn or when the vehicle is moved by hand.

To produce the righting force in proportion to the swing angle of the front frame, a torsion bar may be used in place of the tension springs, as disclosed in a Japanese laid-open patent application No. Sho-51-22242. The tricycle shown in this publication has a constitution in which the connecting portion between the front and rear frames is located in the vicinity of the front edge of the rear wheel as seen in side view, and a torsion bar is placed between a hanger pipe supporting a pedal crankshaft of the front frame and the front end of the rear frame. However, since the torsion bar of this tricycle is exposed, it detracts from the quality of appearance.

To arrange the torsion bar not to be exposed, it is conceivable to place the torsion bar in a frame pipe as disclosed for example in a Japanese laid-open utility model application publication No. Sho-52-56602. The swing righting device shown in this publication is constituted that; a connecting member of the rear frame is rotatably connected to the rear end of the main pipe of the front frame, the front end of the torsion bar placed in the front frame is connected to the front frame, and the rear end of the torsion bar is connected to the connecting member.

However, the swing righting device of a built-in torsion bar type or the swing righting device with exposed torsion bar has a problem: Since the total length of the torsion bar placed between the pedal crankshaft and the rear wheel shaft is short and since there is a limit to the permissible stress of the spring material, the degree of freedom in choosing the spring constant is restricted.

Another problem is that, because of the short span of the connecting portion between the front frame and the rear frame, a large load is applied to the bearings located in the connecting portion, which is likely to cause damage to the bearings and deformation of the support portion.

This invention has been made to solve the above problems. The first object of the invention is to provide a swing type of three-wheeled vehicle provided with a torsion bar type of swing righting device with which a large load is not applied to the support member and bearings in the connecting portion, and the degree of freedom in setting the spring constant is increased while employing a constitution of concealing the torsion bar to improve the quality of appearance. The second object is to bring about an electric motor-assisted three-wheeled vehicle that requires less effort when making a turn or when the vehicle is manually moved.

### Disclosure of the Invention

To solve the above problems, the swing type of three-wheeled vehicle of this invention is constituted that; a front frame is provided with a support pipe extending rearward from below a seat parallel to the longitudinal direction beyond a rear wheel shaft, the outside circumferential portion of the support pipe is made to rotatably support the main pipe of a rear frame, the front end of a torsion bar placed inside the support pipe is connected to the front end of the support pipe, and the rear end of the torsion bar is connected to the rear end of the main pipe.

With this invention, since the torsion bar is made to extend from the lower end of the seat supporting portion rearward beyond the rear wheel shaft, the torsion bar is made longer than in conventional arrangements, so that the amount of deformation per unit length of the torsion bar is reduced, while employing the constitution in which the torsion bar is not exposed outside but placed inside the pipe of the frame. This makes it possible to choose the diameter of the torsion bar over a wide range and increase the degree of freedom in designing the spring constant of the torsion bar. Moreover, since the longitudinal span of the connecting portion between the front and rear frames may be made long, bearings in the connecting portion are prevented from being subjected to great loads, and reliability of the connecting portion is enhanced.

The swing type of three-wheeled vehicle of claim 2 is based on the same of claim 1, in which a power unit for driving the rear wheels with human power and electric motor power is mounted on the front frame.

The front half part of the swing type of three-wheeled vehicle of this invention is similarly constituted to that of the existing electric motor-assisted two-wheeled vehicle. Therefore, this invention makes it possible to manufacture a swing type of electric motor-assisted three-wheeled vehicle at a low cost in a simple manner while utilizing the power unit and the front half part of the vehicle body frame of the existing electric motor-assisted two-wheeled vehicle as they are.

The swing type of three-wheeled vehicle of the invention of claim 3 is based on the swing type of three-wheeled vehicle of the invention of claim 1, in which a power unit for driving the rear wheels with human power and electric motor power is mounted on the rear frame.

With this invention, since the power unit is not present on the swinging side (the front frame side), the weight on the swinging side is reduced. A swing type of three-wheeled vehicle capable to be handled easily with less force is therefore realized.

The swing type of three-wheeled vehicle of the invention of claim 4 is based on the swing type of three-wheeled vehicle of the invention of claim 3, in which the power unit is constituted by placing in a single housing; a human power transmitting mechanism, an electric motor power transmitting mechanism, a resultant power transmitting mechanism for combining the human power and electric motor power into resultant power to be transmitted to the rear wheels, and a human power detecting mechanism for detecting the magnitude of the human power.

With this invention, the power unit is placed compactly in a small space located low on the rear frame side. Thus, a swing type of three-wheeled vehicle in which the vehicle body is configured compactly, the center gravity of the vehicle body is located lower, and a stable swing mechanism is mounted can be realized.

### Brief Description of Drawings

FIG. 1 is a side view of a swing type of three-wheeled vehicle of this invention, in the form of an electric motor-assisted three-wheeled vehicle.

FIG. 2 is a side view of a swing righting device.

FIG. 3 is a plan view of the swing righting device.

FIG. 4 is a front view of a hanger pipe portion; the front end portion of the support pipe and the chain sprocket support portion are shown in sectional views.

FIG. 5 shows the section V-V of the frame in FIG. 3.

FIG. 6 shows the section VI-VI of a swing stop in FIG. 3.

FIG. 7 shows the position of the chain sprocket at the time of swing.

FIG. 8 is a side view of the power unit.

FIG. 9 is a cross-sectional view of the power unit as seen along the line IX-IX in FIG. 8.

FIG. 10 is a side view of an electric motor-assisted three-wheeled vehicle with a modified constitution of the battery.

FIG. 11 is a side view of the electric motor-assisted three-wheeled vehicle of a modified constitution of the power unit.

FIG. 12 is a side view of the power unit mounting portion in an enlarged scale.

FIG. 13 is a plan view of the rear part of the vehicle body.

FIG. 14 is a rear view of the rear part of the vehicle body.

FIG. 15 is a side view of the drive shaft and its vicinity.

FIG. 16 shows the section A - A of the rear wheel support portion in FIG. 14.

FIG. 17 is a cross-sectional view of the portion where the torsion bar is installed.

FIG. 18 is a side view of the power unit cover.

### Best Modes to Implement the Invention

### <Example 1>

### First Embodiment

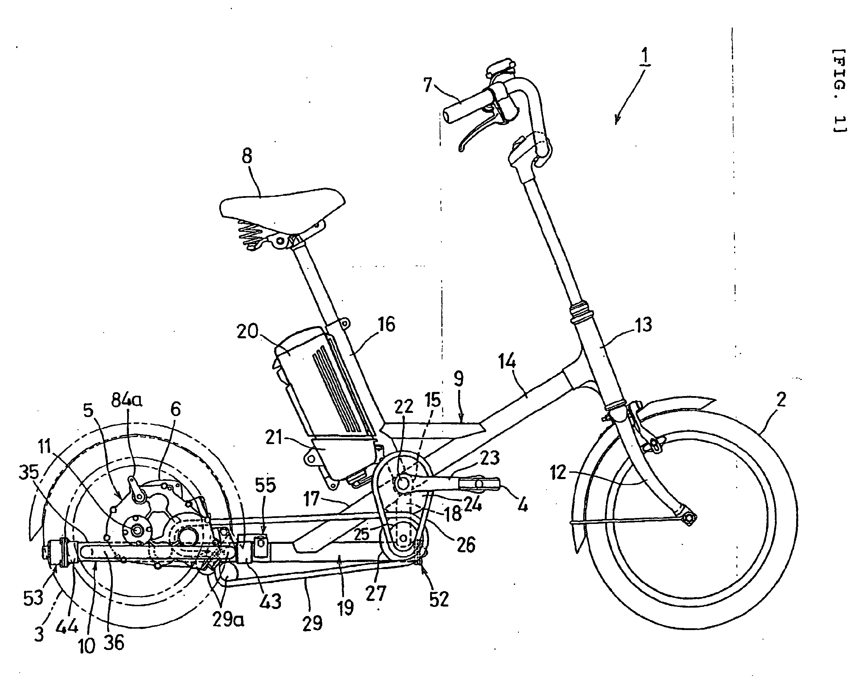

The first embodiment of the swing type of three-wheeled vehicle of this invention will be hereinafter described in reference to FIGs. 1 to 9.

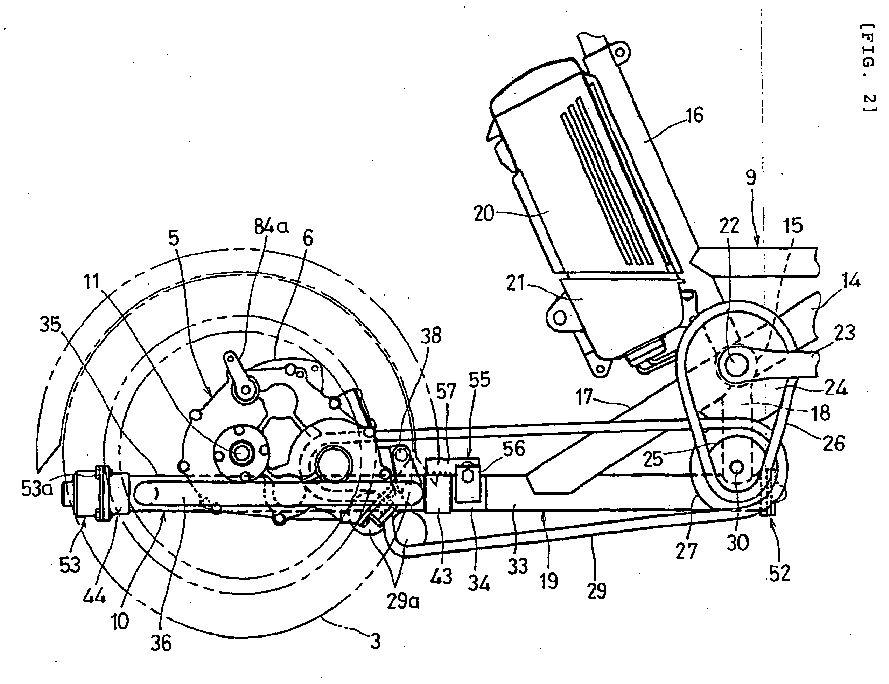

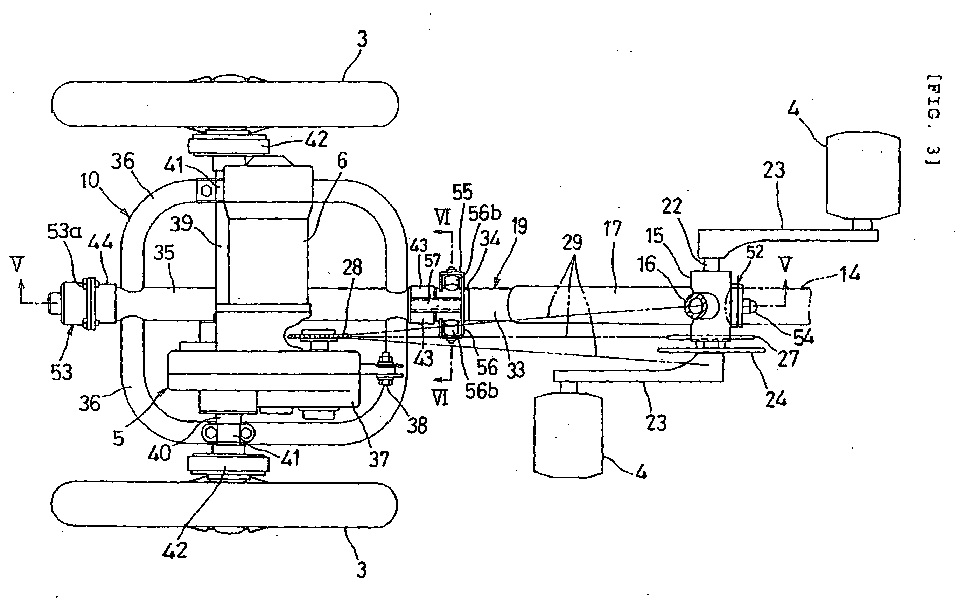

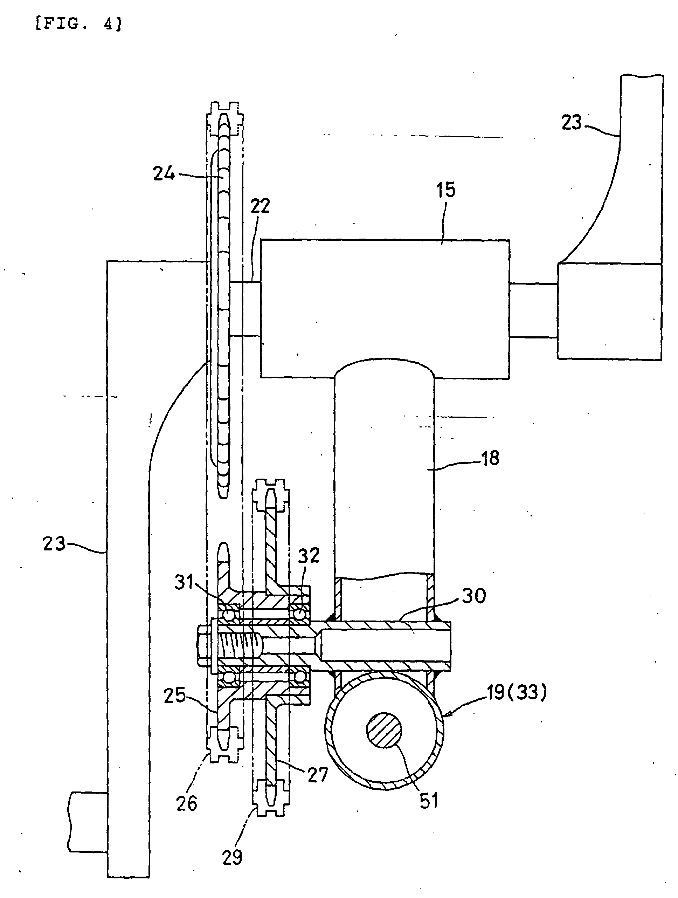

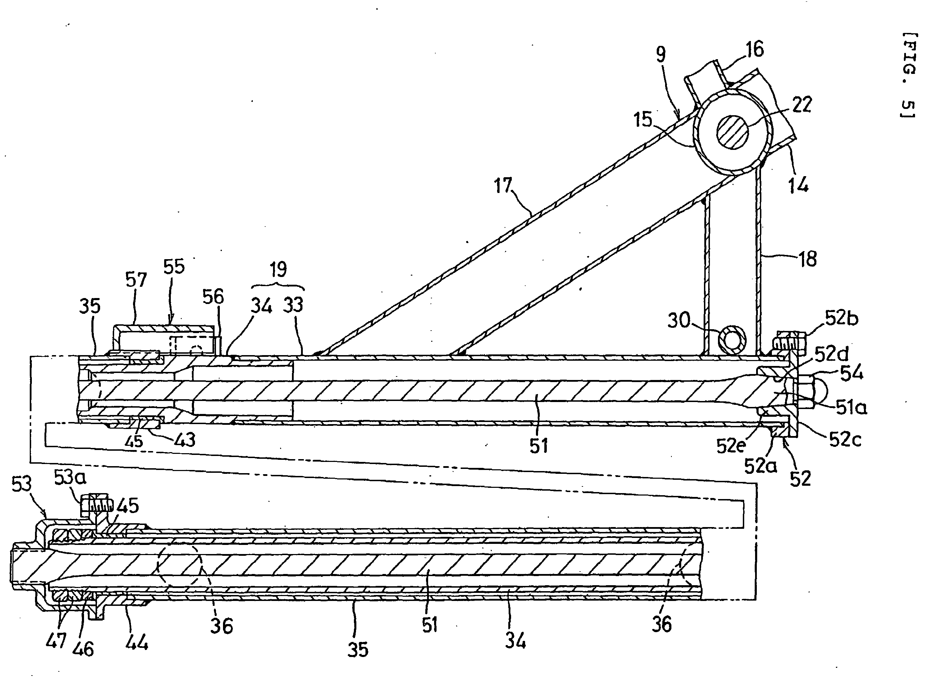

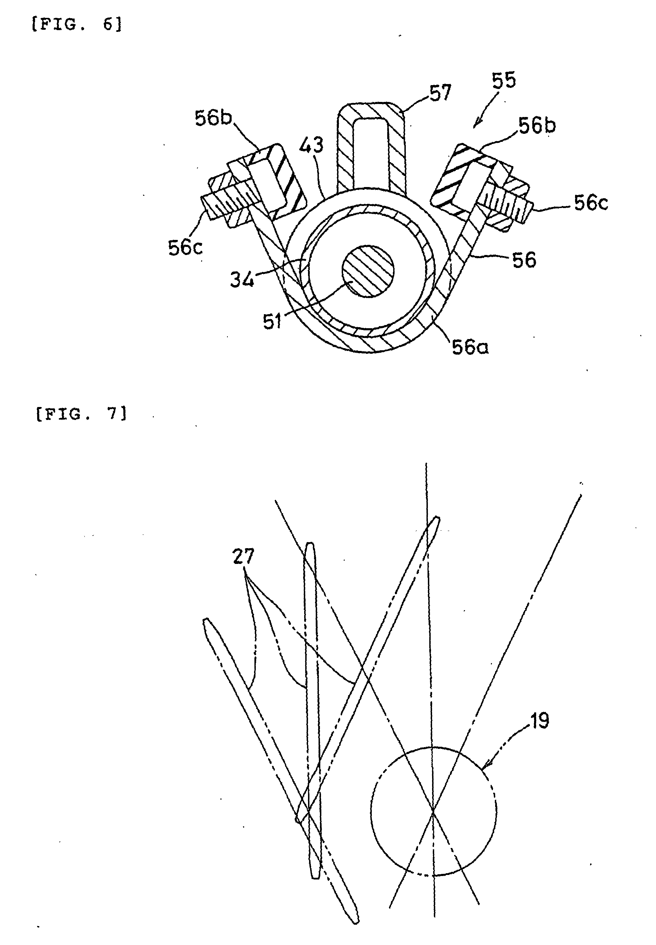

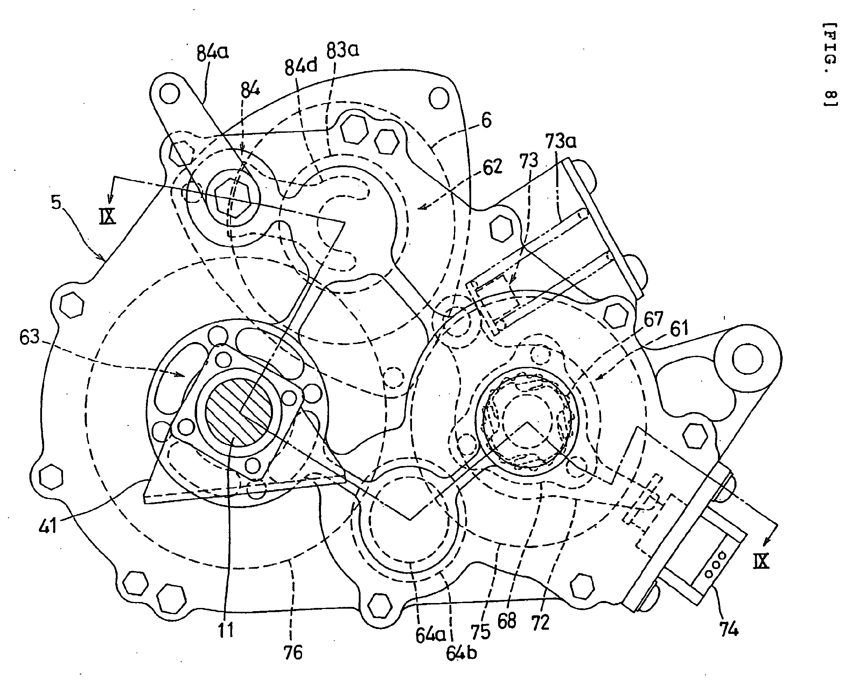

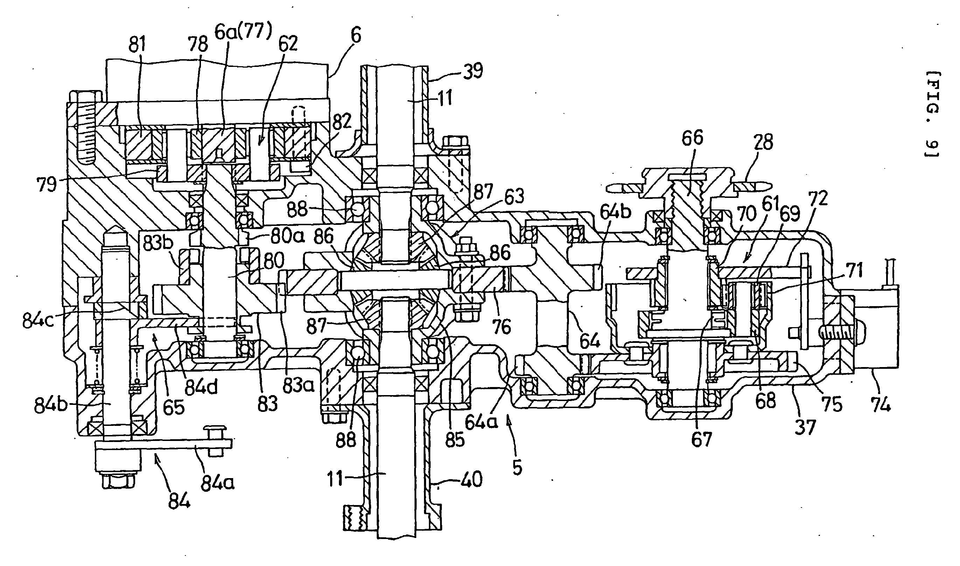

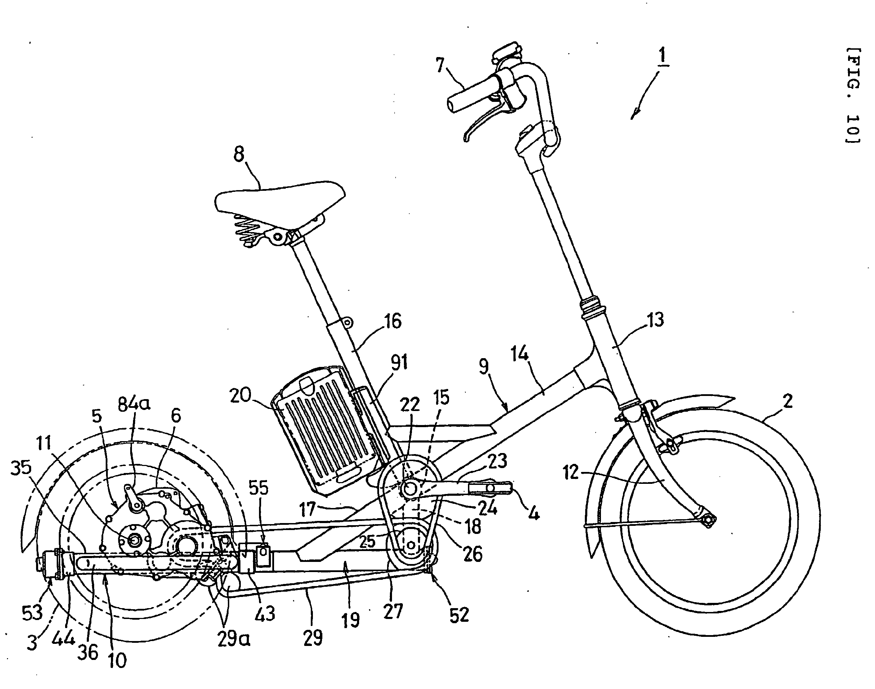

FIG. 1 is a side view of a swing type of three-wheeled vehicle of this invention, an electric motor-assisted three-wheeled vehicle. FIG. 2 is a side view of a swing righting device. FIG. 3 is a plan view of the swing righting device. FIG. 4 is a front view of a hanger pipe portion; the front end portion of the support pipe and the chain sprocket support portion are shown in sectional view. FIG. 5 shows the section V-V of the frame in FIG. 3. FIG. 6 shows the section VI-VI of a swing stop in FIG. 3. FIG. 7 shows the position of the chain sprocket at the time of swing. FIG. 8 is a side view of the power unit. FIG. 9 is a cross-sectional view of the power unit as seen along the line IX-IX in FIG. 8.

In these figures, the object shown with a symbol 1 is the electric motor-assisted three-wheeled vehicle of this embodiment. The electric motor-assisted three-wheeled vehicle 1 comprises a front wheel 2, and two, right and left rear wheels 3, and is constituted to take a mode of being propelled with pedal depressing force, namely with human power only, or a mode of being propelled with combination of the human power and the power of an electric motor 6 of a power unit 5 which will be described later. Incidentally, it is also possible to employ a constitution provided with an automatic running change switch for switching between a circuit for controlling the output of the motor 6 according to the human power and a circuit for controlling the output of the motor 6 to maintain a current vehicle speed irrespective of the human power, or a constitution provided with a speed regulator (accelerator device) for manually regulating the output of the motor 6 to propel the vehicle with only the power of the motor 6.

The front frame 9 having the front wheel 2, steering handlebars 7, and a saddle 8 of the electric motor-assisted three-wheeled vehicle 1 is connected for swinging right and left to the rear frame 10 supporting two, right and left rear wheels 3 and a power unit 5 in the vicinity of the wheel shafts 11 of the rear wheels 3.

The front frame 9 as shown in FIG. 9 is constituted with a head pipe 13 for supporting freely steerably a front fork 12 and steering handlebars 7, a down tube 14 extending obliquely rear downward from the head pipe 13, a seat tube 16 connected through a hanger pipe 15 to the rear end of the down tube 14, and a support pipe 19 connected through two connecting pipes 17 and 18 to the hanger pipe 15. The front wheel 2 is supported with the front fork 12. The saddle 8 is attached to the top of the seat tube 16. A battery 20 is supported behind the seat tube 16. The battery 20 supplies power to the motor 6 of the power unit 5 to be described later, is placed in a box-like battery holder 21 secured to the seat tube 16, and is removable along the longitudinal direction of the seat tube 16. The seat tube 16 constitutes the seat support portion related to this invention.

The hanger pipe 15 supports a pedal crankshaft 22 for free rotation. Each pedal 4 is attached to either end of the pedal crankshaft 22 through a crank 23. As shown in FIGs. 3 and 4, a first drive chain sprocket 24 is integrally formed with the crank 23 located on the right hand of the vehicle. The first drive chain sprocket 24 is connected through a first chain 26 to a second drive chain sprocket 25 supported for free rotation on a connecting pipe 18 extending downward from the hanger pipe 15. As shown in FIG. 4, a third drive sprocket 27 positioned coaxially with and inside the second drive chain sprocket 25 is secured to the second drive chain sprocket 25.

The third drive sprocket 27 is connected to a driven sprocket 28 (See FIG. 3) of the power unit 5 through a second chain 29, so that the rotation of the pedal crankshaft 22 is transmitted to the driven sprocket 28 of the power unit 5 through the power transmitting route constituted in the order of; the first chain sprocket 24, the first chain 26, the second drive chain sprocket 25, the third drive chain sprocket 27, and the second chain 29. The second drive chain sprocket 25 and the third drive chain sprocket 27 are supported for free rotation through bearings 31 and 32 on a support shaft 30 projecting from the connecting pipe 18.

The support pipe 19 connected to the lower ends of the connecting pipes 17 and 18 as shown in FIG. 5 is made up of a first support pipe 33 welded to the connecting pipes 17 and 18, and a second support pipe 34 welded to the rear end of the first support pipe 33. As seen in FIGs. 1 and 2 in side view, the support pipe 19, below the saddle 8, extends parallel to the longitudinal direction of the vehicle to a position beyond the wheel shafts 11 of the rear wheels 3 and near the rear ends of the rear wheels 3. All the pipes including the support pipe 19 of the front frame 9 are located in the center of the vehicle width as shown in FIG. 3.

On the other hand, the rear frame 10 for supporting the rear wheels as shown in FIGs. 2 and 3 are made up of a main pipe 35 extending longitudinally in the vehicle width center, and sub-pipes 36, 36 of the shape of a U as seen in plan view extending from both sides of the main pipe 35 to the vicinity of the rear wheels 3. The sub-pipes 36, 36 are welded to the front and rear end portions of the main pipe 35, and extend generally horizontally sideways from the main pipe 35. As shown in FIGs. 1 and 2, a tension device 29a for providing tension to the second chain 29 is supported through a bracket (not shown) at the front end of the sub-pipe 36 on the right hand of the vehicle.

The wheel shafts 11 are supported for free rotation on the power unit 5. The rear wheels 3 are supported through the power unit 5 on the rear frame 10. The power unit 5 is secured to the rear frame 10 as shown in FIG. 3: The front end of a housing 37 of the power unit 5 is attached to the sub-pipe 36 on the right hand of the vehicle using a connection bolt 38, while a left hand wheel shaft tube 39 and a right hand wheel shaft tube 40 extending sideways from the housing 37 are secured through tightening pieces 41 to the left and right sub-pipes 36. Two objects, each with a symbol 42, shown in FIG. 3 at distal end portions of the left and right wheel shaft tubes 39 and 40 are rear wheel brakes.

The main pipe 35 is made in a length extending from near the front end to near the rear end of the rear wheel 3 in side view. Connecting cylinders 43 and 44 are welded to both ends of the main pipe 35. As shown in FIG. 5, the second support pipe 34 of the front frame 9 passes inside the main pipe 35 to support the main pipe 35 for free rotation. In this embodiment, sliding bearings 45 are interposed between the connecting cylinders 43 and 44 and the second support pipe 34, so that the second support pipe 34 smoothly rotates relative to the main pipe 35. When the second support pipe 34 rotates relative to the main pipe 35, the front frame 9 swings right and left relative to the rear frame 10.

Arranging that the support pipe 19 and the main pipe 35 extend generally longitudinally horizontally as in this embodiment makes it possible to reduce the amount of change in the direction of the rear wheels 3 toward the direction in which the vehicle is tilted when the front frame 9 is swung. Placing the support shaft 30, for supporting the third drive chain sprocket 27 connected to the second chain 29, near the support pipe 19 reduces the amount of change in the position of the third drive chain sprocket 27 when the front frame 9 swings, which in turn minimizes the torsion of the second chain 29. The changes in the position of the third drive chain sprocket 27 when the front frame 9 swings are shown in FIG. 7. The changes in the chain line of the second chain 29 when the front frame 9 swings are shown with phantom lines in FIG. 3.

The positioning in the fore-and-aft directions of the main pipe 35 is made by bringing the connecting cylinder 43 on the front end into contact with the second support pipe 34 through the sliding bearing 45 and by bringing a spacer 46 into contact with the connecting cylinder 44 on the rear end through the sliding bearing 45. The spacer 46 is positioned and prevented from coming off with two nuts 47, 47 screwed onto the rear end of the second support pipe 34.

A torsion bar 51, or the swing righting device of this invention, is placed inside the second support pipe 34.

The torsion bar 51 is made of a spring material in a rod shape, with is front end secured to the front end of the first support pipe 33 through a front connecting member 52, and with its rear end connected to the rear connecting cylinder 44 through a rear connecting member 53. The front connecting member 52 is constituted with a flange 52a welded to the first support pipe 33 and a connecting main part 52c secured to the flange 52a using a securing bolt 52b. The connecting main part 52c is formed integrally with a boss 52 having a tapered hole 52d. The tapered front end 51a of the torsion bar 51 is fitted into the tapered hole 52d and secured with a securing nut 54 engaging with the front end screw portion of the torsion bar 51. The tapered hole 52d and the tapered front end 51a are formed so that their diameters decrease toward the front of the vehicle and that the torsion bar 51 is secured with the axis of the torsion bar 51 coming into agreement with the axis of the first support pipe 33 when the securing nut 54 is tightened.

The rear end of the torsion bar 51 is spline-fitted and secured to the rear connecting member 53 together with the rear connecting cylinder 44 secured with a securing bolt 53a. Employing this constitution of connecting the front end of the torsion bar 51 to the front frame 9 through the tapered portion 51a and connecting the rear end to the rear frame 10 through the spline fit makes it possible to neglect dimensional error in manufacture of the torsion bar 51. That is to say, the positioning of the front frame 9 in upright attitude becomes easy as the attitude of the front frame 9 is first determined irrespective of circumferential position accuracy of the spline-processed portion and then the tapered portion 51a is tightened. Incidentally, it is alternatively possible to spline-fit the front end of the torsion bar 51 to the front frame 9 side while connecting the rear end of the torsion bar 51 through the tapered portion to the rear frame 10 side.

The torsion bar 51 interposed as described above between the support pipe 19 and the rear frame 10 is twisted when the front frame 9 is swung right and left relative to the rear frame 10. As a result, the torsion bar 51 produces resilient righting force which assists the front frame 9 in returning to upright attitude (straight run attitude) after finishing a turn. The maximum swing angle of the front frame 9 is defined with a stop 55 provided at the connecting portion between the front end of the rear frame 10 and the support pipe 19.

The stop 55, as shown in FIGs. 1, 2, 3, 5, and 6, is constituted with a pressing member 56 provided on the support pipe 19 (second support pipe 34) and a pressure receiving member 57 welded to the front connecting member 43 of the rear frame 10. The pressing member 56 is made by welding a support plate 56a of a U shape in cross section to the second support pipe 34 and by securing a rubber damper 56b using a screw 56c to both ends of the support plate 56a. The pressure receiving member 57 is made in the shape of U in cross section opening downward and placed between the two rubber dampers 56b. That is, the stop 55 prevents the front frame 9 from being tilted beyond a point at which one of the rubber dampers 56b strikes a side face of the pressure receiving member 57 in a side direction.

The torsion bar 51 can be chosen and replaced according to the preference of a rider from among a plural number of torsion bars having different spring constants prepared in advance. To replace the torsion bar 51, the connecting main part 52c is removed from the support pipe 19, and the torsion bar 51 is drawn forward out of the support pipe 19. It is also possible to draw the torsion bar 51 toward the rear by removing the securing nut 54 and the securing bolt 53a of the rear connecting member 53, and striking the front end (tapered portion 51a) of the torsion bar 51 toward the rear with a hammer or the like.

The power unit 5 mounted on the rear frame 10 is constituted with the housing 37 accommodating various components described later and with the electric motor 6 attached to the housing 37. The components accommodated in the housing 37 include as shown in FIG. 9; a planetary gear type of step-up transmission 61 connected to the driven sprocket 28, a planetary roller type of step-down transmission 62 for reducing the revolution of the output shaft 6a of the electric motor 6, a differential gear device 63 having the wheel shafts 11 for the rear wheels 3, a geared shaft 64 for transmitting human power from the planetary gear type of step-up transmission 61 to the differential gear device 63, and a motor clutch 65 for transmitting the power of the electric motor 6 to the differential gear device 63.

The planetary gear type of step up transmission 61 comprises a carrier 68 connected through a one way clutch 67 to an input shaft 66 to which is secured the driven sprocket 28, an outside circumferential gear 71 and a sun gear 70 engaging with planetary gears 69 supported for free-rotation on the carrier 68. A reaction force receiving mechanism 73 (See FIG. 8) and a human power detecting sensor 74 are interconnected through an arm 72 formed integrally with the sun gear 70. A ring gear 75 is attached to the outside circumferential gear 71 so that the gear 71 is connected through the gear 75 to a small diameter gear 64a of the geared shaft 64. A large diameter gear 64b of the geared shaft 64 engages with a ring gear 76 of the differential gear device 63.

The reaction force receiving mechanism 73 is constituted to stop the rotation of the arm 72 with the resilient force of a compression spring 73a. The human power detecting sensor 74 is arranged to convert the amount of rotation of the arm 72 into an electric signal and send it to a controller (not shown). The controller controls the output of the motor 6 according to the amount of rotation of the arm 72 (which corresponds to the magnitude of human power).

The planetary roller type of step-down transmission 62 uses the output shaft 6a of the motor 6 as a sun roller 77. A rotary shaft 80 of the motor clutch 65 is spline-fitted to a carrier 79 which supports planetary rollers 78 which are in contact with the sun roller 78. An outside circumferential ring 81 of the planetary roller type of step-down transmission 62 is secured to the motor 6 using a securing bolt 82.

The motor clutch 65 is constituted with the rotary shaft 80, a slider 83 supported for free rotary and axial movement on the rotary shaft 80, and a drive mechanism 84 for changing the axial position of the slider 83. The slider 83 is constituted by combining together a main gear 83a engaging with the ring gear 76 of the differential gear device 63 and an internal gear 83b engaging with a gear 80a of the rotary shaft 80. The main gear 83a constantly engages with the ring gear 76 irrespective of the change in the position of the slider 83, while the internal gear 83b engages with the gear 80a of the rotary shaft 80 when the slider 83 is-shifted from the position shown in FIG. 9 toward the motor 6.

The drive mechanism 84 is constituted with a shift fork 84d connected through a cam 84c to a lever shaft 84 having an operation lever 84a. When the lever shaft 84b rotates, the shift fork 84d causes the slider 83 to move in the axial direction.

Power of the motor 6 is transmitted to the differential gear device 63 when the planetary roller type of step-down transmission 62 is connected to the differential gear device 63 through the motor clutch 65. This embodiment is arranged that the rotation of the motor 6 is controlled so that the vehicle speed does not increase excessively on a downgrade in the state of the motor 6 being connected and that the vehicle speed is decreased by regenerative braking in which the motor 6 is used as a generator when the rotation speed of the motor 6 exceeds a predetermined value. When the vehicle is manually moved for parking or the like or when the vehicle is propelled with human power only, the motor clutch 65 is used to disconnect the power transmitting route of the motor 6 so as to prevent the motor 6 from becoming resistance to propelling the vehicle.

The differential gear device 63 is constituted that pinions 86 are supported for free rotation on a case 85 to which is secured the ring gear 76, and that the pinions 86 engage with side gears 87 of right and left wheel shafts 11. One end of each wheel shaft 11 where the side gear 87 is fixed is supported for free rotation with a bearing 88 in the housing 37 of the power unit 88. The other (rear wheel 3 side) end of the wheel shaft 11 is supported for free rotation with a bearing (not shown) in the outer end portion of a wheel shaft tube 39 or 40.

The swing type of three-wheeled vehicle 1 described above is constituted that; a support pipe 19 extending parallel to the longitudinal direction rearward beyond the wheel shafts 11 of the rear wheels 3 is provided at the lower end of the front frame 9, the outside circumferential portion of the support pipe 19 is made to rotatably support the main pipe 35 of the rear frame 10, the front end of the torsion bar 51 placed inside the support pipe 19 is connected to the front end of the support pipe 19, and the rear end of the torsion bar 51 is connected to the rear end of the main pipe 35. As a result, the torsion bar 51 is made longer than in conventional arrangements, so that the amount of deformation per unit length of the torsion bar 51 is reduced.

Therefore, it is possible to choose the spring constant over a wide range, namely increase the degree of freedom in designing the spring constant, and choose inexpensive spring materials.

Moreover, since the power unit 5 is mounted on the rear frame 10, the weight of the front frame 9 is reduced and the vehicle is handled more lightly in comparison with conventional electric motor-assisted three-wheeled vehicle in which the power unit 5 is mounted on the front frame 9.

### <Example 2>

### Second Embodiment

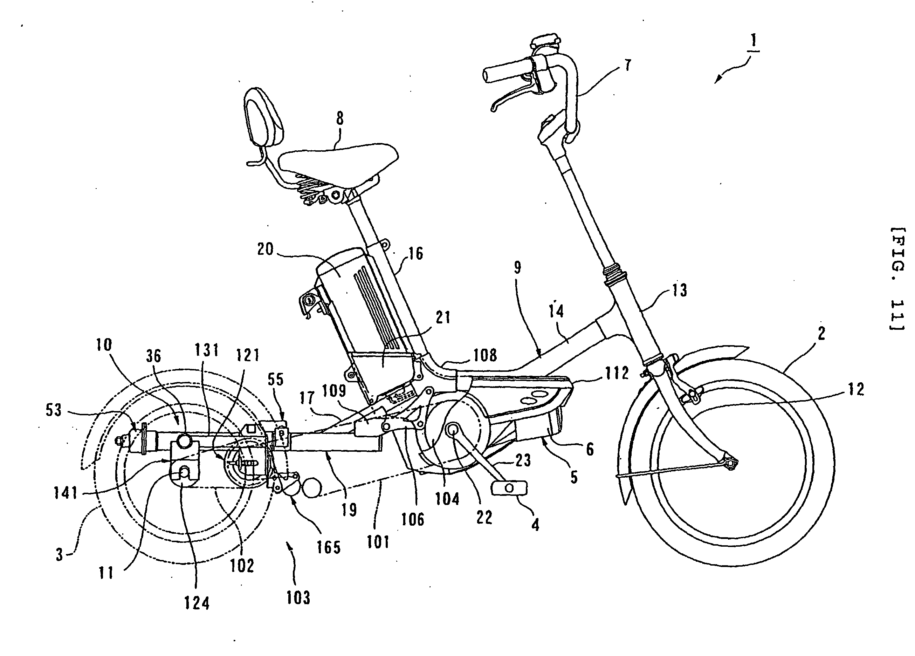

The swing type of three-wheeled vehicle may be constituted as shown in FIG. 10. FIG. 10 is a side view of an electric motor-assisted three-wheeled vehicle with a modified constitution of the battery. In the figure, components that are the same as or similar to those described in reference to FIGs. 1 to 9 are provided with the same symbols and their detailed descriptions are omitted.

The electric motor-assisted three-wheeled vehicle 1 shown in FIG. 10 is arranged that a bracket 9 is secured on the back side of the seat tube 16, and the battery 20 is removably installed on the bracket 91. With this constitution, it is possible to lower the position of mounting the battery 20 in comparison with the arrangement of the first embodiment. That is, since it is possible to place the battery 20 close to the swing axis of the front frame 9 (support pipe 19), the force for righting the swung front frame 9, or the resilient force of the torsion bar 51, may be reduced. Therefore, it is possible to choose the spring constant over a wide range, namely the degree of freedom in setting the spring constant of the torsion bar 51 is increased. It is also possible to mount the battery 20 on the rear frame 10. With such a constitution, the weight of components mounted on the swinging side (front frame 9 side) decreases, which all the more increases the degree of freedom in setting the spring constant of the torsion bar 51.

In the first and second embodiments, while the three-wheeled vehicles enumerated as examples are of the electric motor-assisted type, they can be of other types such as those without an electric motor mounted, or with an engine mounted.

### <Example 3>

### Third Embodiment

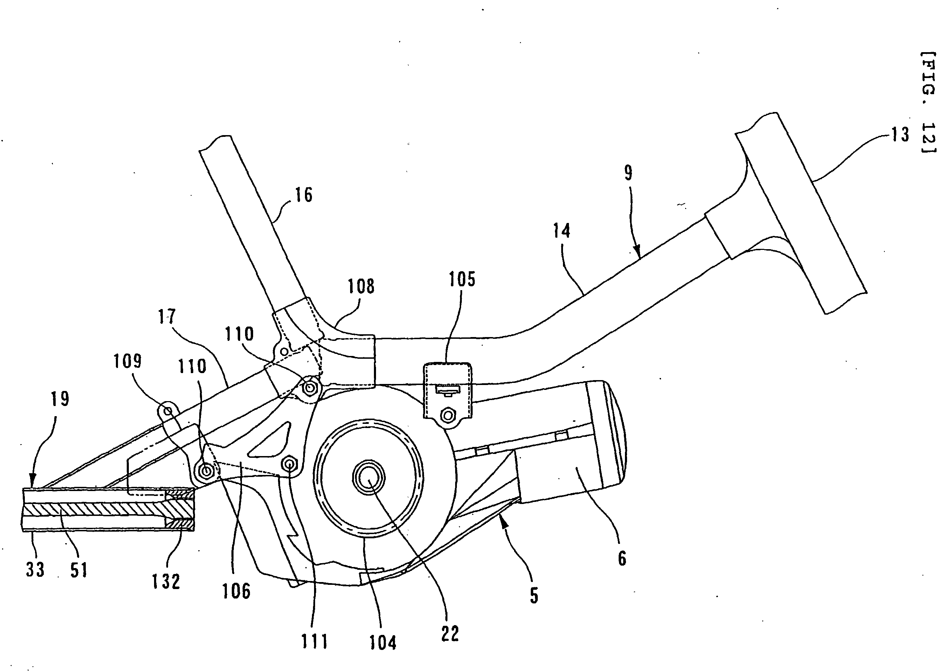

The swing type of three-wheeled vehicle of this invention may be constituted as shown in FIGs. 11 to 18.

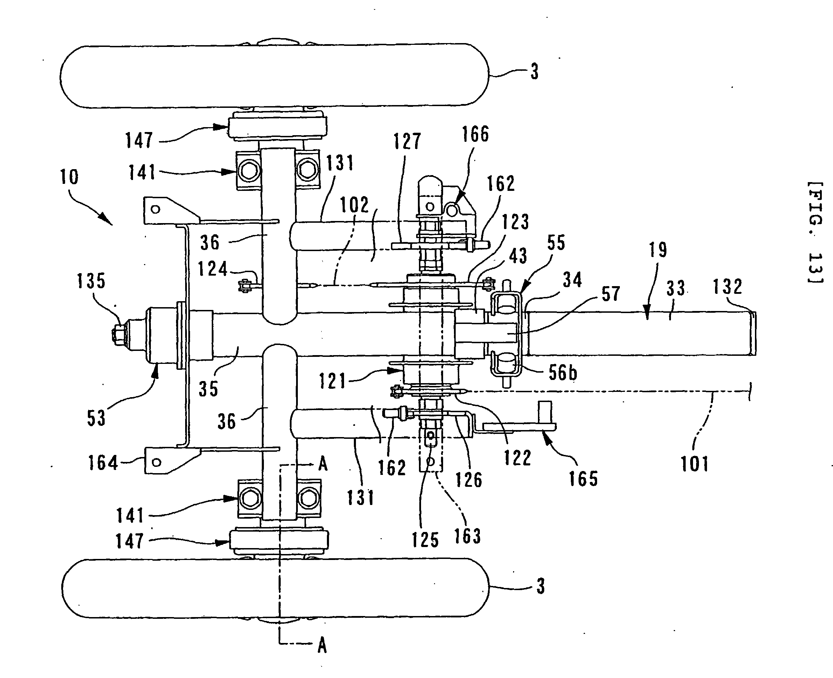

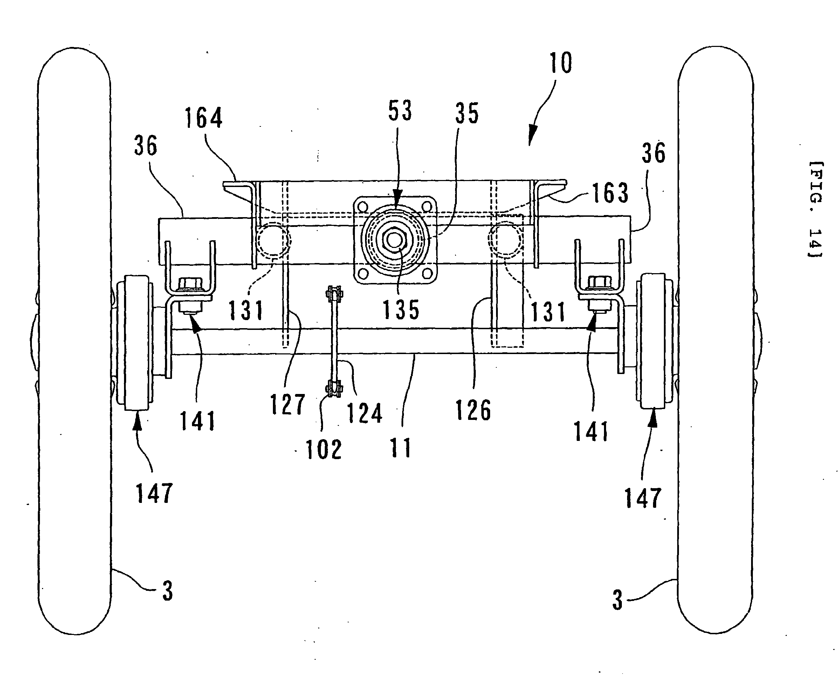

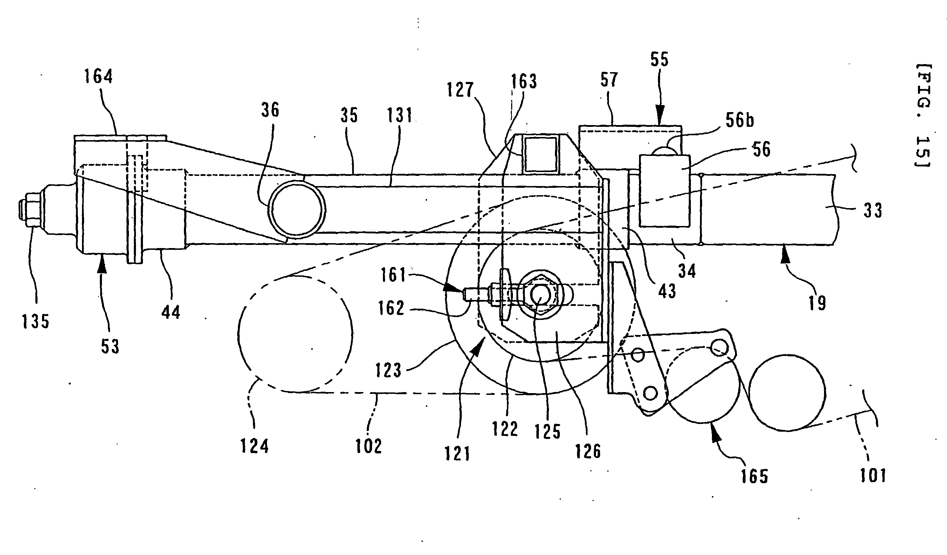

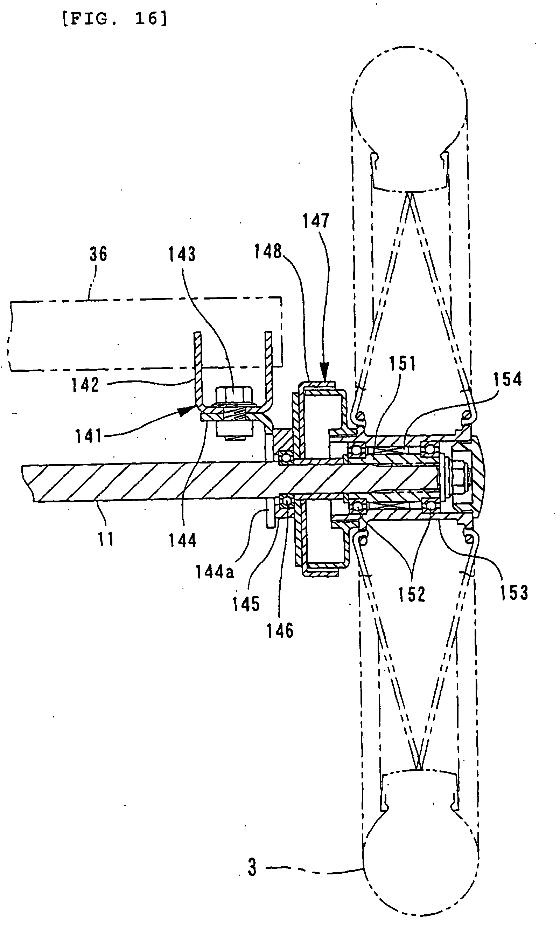

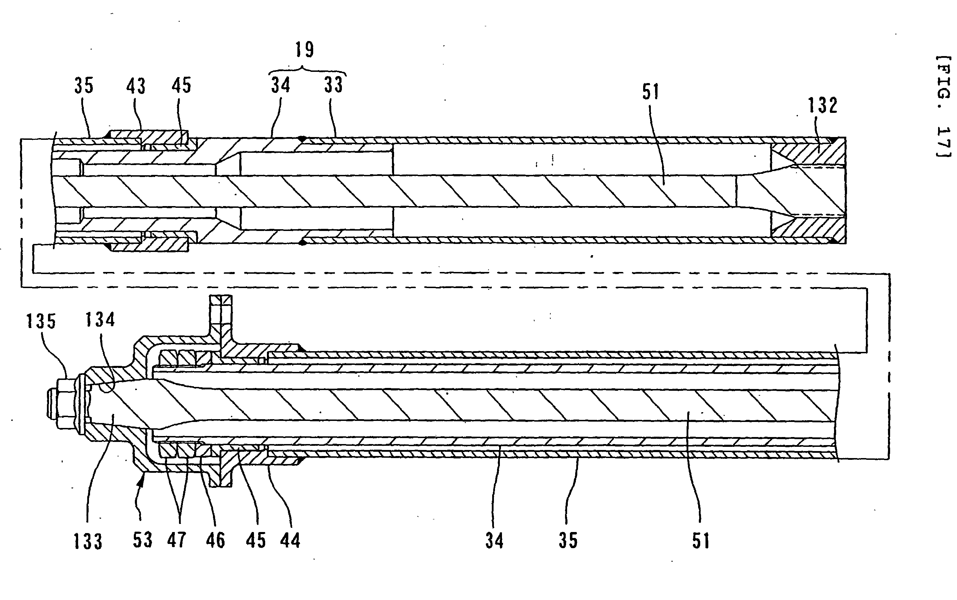

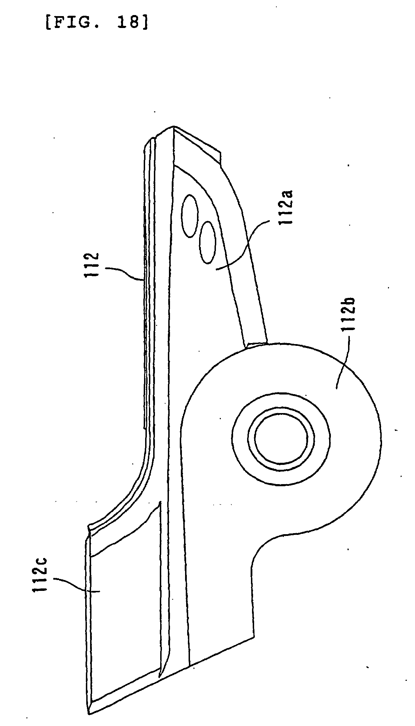

FIG. 11 is a side view of the electric motor-assisted three-wheeled vehicle of a modified constitution of the power unit. FIG. 12 is a side view of the power unit mounting portion in an enlarged scale. FIG. 13 is a plan view of the rear part of the vehicle body. FIG. 14 is a rear view of the rear part of the vehicle body. FIG. 15 is a side view of the drive shaft portion. FIG. 16 shows the section A-A of the rear wheel support portion in FIG. 14. FIG. 17 is a cross-sectional view of the portion where the torsion bar is installed. FIG. 18 is a side view of the power unit cover. In these figures, the components that are the same as or similar to those explained in reference to FIGs. 1 to 9 are provided with the same symbols and their detailed explanations are omitted where appropriate.

In the electric motor-assisted three-wheeled vehicle shown in FIGs. 11 to 18, the power unit 5 is mounted on the front frame. The vehicle is propelled by transmitting the power of the power unit 5 through a transmission 103 having a first chain 101 and a second chain 102 to the wheel shaft 11 of the rear wheels 3. The wheel shaft 11 in this embodiment is made as a single bar spanning between the right and left rear wheels 3.

The power unit 5 is conventionally well-known for use in electric motor-assisted bicycles in which the pedal force (human power) applied to the crankshaft 22 and the power of the electric motor 6 varying according to the pedal force are combined to rotate the output chain ring 104. A first chain 101 is routed around the chain ring 104.

The power unit 5 is mounted on the front frame through front support brackets 105 and rear support brackets 106 in the state of the motor 6 located below the down tube 14 and projecting toward the front of the vehicle body.

The front support brackets 105 and the rear support brackets 106 are provided as pairs, with each pair of brackets apart in the vehicle width directions. Each of the front support brackets 105 is welded at its upper end to the down tube 14, and to its lower end is attached the front part of the power unit 5 using a securing bolt 107. Each of the rear support brackets 106 is attached at its front end to a lug 108 welded to the rear end of the down tube 14 using a securing bolt 110 and at its rear end to a reinforcement plate 109 welded to the connecting pipe 17 and the first support pipe 33 using the securing bolt 110. The rear end part of the power unit 5 is attached to the center of the rear support brackets 106 using a securing bolt 111. The lower end of the seat tube 16 and the front end of the connecting pipe 17 are welded to the lug 108.

The component shown in FIG. 1 with a symbol 112 and disposed to cover the power unit 5 is an external cover. The external cover 112 is formed to be split in the vehicle width directions and, as shown in FIG. 18, each split part has a front portion 112a covering from above the motor 6, a middle portion 112b covering the gear case portion of the power unit 5, and a rear portion 112c covering the battery receiving member 21.

As shown in FIG. 13, the transmission 103 comprises a transmission unit 121 placed between the first chain 101 and the second chain 102. The transmission unit 121 is constituted utilizing the rear wheel hub for bicycles having a built-in type of three-speed gears (not shown), with its vehicle width right hand end provided with an input sprocket 122 and with its left hand end provided with an output sprocket 123. The input sprocket 122 is connected through the first chain 101 to the chain ring 104 of the power unit 5. The output sprocket 123 is connected through the second chain 102 to the driven sprocket 124 (See FIGs. 14 and 15) fixed to the wheel shaft 11 of the rear wheels 3.

The transmission unit 121 includes a built-in speed changing mechanism (not shown) so that the output sprocket 123 rotates at different speeds from the revolution of the input sprocket 122. Both ends of a support shaft 125 located in the center of the transmission unit 121 are secured to brackets 126 and 127 of a plate shape for supporting the transmission of the rear frame 10. Here, the constitution of the rear frame 10 will be explained.

The rear frame 10, as shown in FIGs. 13 and 14, comprises; a main pipe 35 located in the vehicle width center and supported for free rotation on the support pipe 19, sub-pipes 36 extending in a straight line on both sides in the vehicle width directions from the main pipe 35, and paired transmission support pipes 131 extending from halfway points of the sub-pipes 36 generally horizontally toward the front of the vehicle body.

The main pipe 35, as shown in FIG. 17, with a similar constitution to that of the first embodiment, is supported for free rotation on the support pipe 19 and connected also to the support pipe 19 through the torsion bar 51. In this embodiment, the front end of the torsion bar 51 is spline-fitted to a support block 132 at the front end of the support pipe 19. The rear end of the torsion bar 51 is formed into a tapered portion 133 thinning toward its distal end. The tapered portion 133 is fitted into a tapered hole 134 formed in the rear connecting member 53 provided at the rear end of the main pipe 35 and is tightened with a securing nut 135.

This constitution makes it possible to draw out the torsion bar 51 toward the rear of the vehicle by removing the securing nut 135 and the rear connecting member 53. That is, the work of attachment and removal of the torsion bar 51 is made easy from behind the vehicle body while employing the constitution in which the power unit 5 is located in front of the support pipe 19.

The sub-pipe 36 is provided with a wheel shaft support bracket 141 at its vehicle width outside end portion to support the wheel shaft 11 for free rotation. The constitution of supporting the wheel shaft 11 is the same for both of the right and rear wheels 3. Therefore, only the constitution for supporting the right hand wheel 3 is explained here.

The wheel shaft support bracket 141 is made up of; an upper bracket 142 of a U shape cross section opening upward, welded to the sub-pipe 36, and extending downward; a lower bracket 144 secured to the bottom of the upper bracket 142 using a securing bolt 143; and a bearing cylinder 145 welded to the lower bracket 144.

The lower bracket 144 is formed with a cut 144a opening downward and, with the wheel shaft 11 placed in the cut 144a, is attached to the upper bracket 142. The inside circumferential portion of the bearing cylinder 145 supports through a bearing 146 the wheel shaft 11. To the cylinder 145 is also welded a housing 148 of a radially expanding type of drum brake 147. The drum brake 147 brakes both of the right and left rear wheels 3 alike.

The wheel shaft 11 extends outward in the vehicle width directions beyond the bearing cylinder 145 and the bearing 146. To the outside circumferential portion of the extended portion is spline-fitted a cylindrical member 151. The hub 153 of the rear wheel 3 is supported for free rotation through a bearing 152 on the cylindrical member 151. A one-way clutch 154 for transmitting power only from the wheel shaft 11 to the hub 153 is interposed between the cylindrical member 151 and the hub 153. The rear wheel support structure having the one-way clutch 154 described above is applied to both of the right and left rear wheels 3, so that one rear wheel 3 located outside during a turn does not become a resistance.

The plate-like brackets 126 and 127 are welded to the fore-ends of the paired transmission support pipes 131 extending forward from the sub-pipes 36. The plate-like brackets 126 and 127 are disposed to extend downward, and to their lower ends is attached the support shaft 125 of the transmission unit 121. Adjusting mechanisms 161 for adjusting the fore-and-aft position of the wheel shaft 11 according to the length of the second chain 102 are provided in the portions of the plate-like brackets 126 and 127 where the support shaft 125 is attached. The adjusting mechanisms 161 are constituted that adjusting bolts 162 attached to the support shaft 125 are made to engage with the plate-like brackets 126 and 127. The adjusting bolt 162 of the adjusting mechanism 161 on the right hand of the vehicle body is made to engage with the rear edge of the plate-like bracket 126, while the adjusting bolt 162 of the adjusting mechanism 161 on the left hand of the vehicle body is made to engage with the front edge of the plate-like bracket 127.

The upper edges of the plate-like brackets 126 and 127 are interconnected through a cross member 163 made of a square pipe. The cross member 163 is placed-in crossing direction over the main pipe 35 and supported with it. A carrier (not shown) is attached to the cross member 163 and to a rear stay 164 attached to and extending rearward from the sub-pipes 36.

Of the plate like brackets 126 and 127, the bracket 126 on the vehicle body right hand supports a chain tension device 165 for providing tension to the first chain 101, while the bracket 127 on the left hand supports the operation mechanism 166 of the transmission unit 121. The operation mechanism 166 is connected through a cable to an operation member (not shown) provided on one of the steering handlebars 7. The speed of the transmission unit 121 is changed by operating the operation member.

With the above-described constitution too, the same effect is provided as with the first and second embodiments. Since the electric motor-assisted three-wheeled vehicle of the third embodiment employs the constitution in which the power unit 5 is mounted on the front frame 9, the front half (including the front frame 9, the power unit 5, etc.) is of the same constitution as that of the front half of existing electric motor-assisted two-wheeled vehicle. Therefore, the electric motor-assisted three-wheeled vehicle may be manufactured at a low cost in a simple manner utilizing the power unit and the components in the front half of the vehicle body of the existing electric motor-assisted two-wheeled vehicle.

### Industrial Applicability

As described above, the swing type of three-wheeled vehicle of this invention is useful in the swing type of three wheeled vehicle in which a rear frame having two rear wheels is connected through a torsion bar to a front frame, and in particular suitable for the swing type of three-wheeled vehicle utilizing the electric motor power for propulsion.

## Claims

1. A swing type of three-wheeled vehicle constituted by interconnecting a rear frame supporting two rear wheels and a front frame supporting a front wheel and a seat through a torsion bar extending in the longitudinal direction of the vehicle body, **characterized in that**; a support pipe extending from the underneath of the seat, parallel to the longitudinal direction rearward beyond the rear wheel shaft, to the front frame is provided at the lower end of the seat supporting portion of the front frame, the outside circumferential portion of the support pipe is made to rotatably support a main pipe of the rear frame, the torsion bar is placed inside the support pipe, the front end of the torsion bar is connected to the front end of the support pipe, and the rear end of the torsion bar is connected to the rear end of the main pipe.

2. A swing type of three-wheeled vehicle of claim 1,
**characterized in that** a power unit for driving the rear wheels with human power and electric motor power is mounted on the rear frame.

3. A swing type of three-wheeled vehicle of claim 1,
**characterized in that** a power unit for driving the rear wheels with human power and electric motor power is mounted on the rear frame.

4. A swing type of three-wheeled vehicle of claim 3,
**characterized in that** the power unit is constituted by placing in a single housing; a human power transmitting mechanism, an electric motor power transmitting mechanism, a resultant power transmitting mechanism for combining the human power and electric motor power into resultant power to be transmitted to the rear wheels, and a human power detecting mechanism for detecting the magnitude of the human power.
